# EUROPEAN PATENT SPECIFICATION

(11) **EP 1 741 306 B1**
(45) Date of publication and mention of the grant of the patent: **24.07.2013**
(21) Application number: 04729418.6
(22) Date of filing: 26.04.2004
(51) Int. Cl.: H04W 48/04, H04W 48/02

(54) **VALIDATION OF MOBILE STATIONS IN UNLICENSED RADIO ACCESS NETWORKS**
VALIDIERUNG VON MOBILSTATIONEN IN UNLIZENSIERTEN FUNKZUGANGSNETZEN
VALIDATION DE STATIONS MOBILES DANS DES RESEAUX D'ACCES RADIO NON AUTORISES

(43) Date of publication of application: 10.01.2007
(73) Proprietor: TELEFONAKTIEBOLAGET LM ERICSSON (publ), 164 83 Stockholm (SE)
(72) Inventor: NYLANDER, Thomas, 139 34 Värmdö (SE); HALLENSTÅL, Magnus, S-187 50 Täby (SE); LÜPPERT, Bo, S-151 45 Södertälje (SE); ÖHMAN, L., Peter, S-182 45 Enebyberg (SE); VIKBERG, Jari, S-153 38 Järna (SE)
(74) Representative: Gray, Helen Mary
(86) International application number: PCT/EP2004/004396
(87) International publication number: WO 2005/104592

(56) References cited:
- EP-A- 1 207 708
- WO-A-03/085992
- US-A- 6 167 279
- US-B1- 6 223 032
- SEONGSOO PARK ET AL: "Seamless roaming service in hybrid networks" INFORMATION, COMMUNICATIONS AND SIGNAL PROCESSING, 2003 AND FOURTH PACIFIC RIM CONFERENCE ON MULTIMEDIA. PROCEEDINGS OF THE 2003 JOINT CONFERENCE OF THE FOURTH INTERNATIONAL CONFERENCE ON SINGAPORE 15-18 DEC. 2003, PISCATAWAY, NJ, USA,IEEE, vol. 1, 15 December 2003 (2003-12-15), pages 339-343, XP010701168 ISBN: 0-7803-8185-8

## Description

### Field of invention

The present invention relates to the authentication of mobile stations accessing a cellular communication system via an unlicensed radio access network.

### Background art

In conventional cellular networks, such as GSM, for example, the identity of a mobile station is checked and its operation and right to access the network authenticated using various elements within the core network portion, such as the Home Location Register (HLR), the Equipment Identity Register (EIR) and the authentication centre (AUC).

Conventional cellular networks can be extended by the provision of unlicensed radio access networks, which include an access network controller for interfacing with the core network portion of a conventional cellular system and for controlling a plurality of access points adapted to communicate with mobile stations over an unlicensed radio interface. Such an unlicensed radio access network is described in EP-A-1 207 708. Other examples can be found in US6,167,279 or in WO 03/085992 or in "Seamless Roaming Services in Hybrid Networks", Seong Soo Park et al. The unlicensed radio interface may use any radio technology that does not require an operating license from a licensing authority and in particular may use wireless LAN (WLAN), Bluetooth or DECT radio technologies. While a mobile station that uses an unlicensed radio access network to access a cellular system may be authenticated in the same way as for a conventional access network, however, defective mobile stations can put a heavy operational load on both the access network and the core network, for example when they generate Location Updates or other information in a loop. Also, since mobile stations capable of accessing an unlicensed radio access network will require some modification over conventional mobile stations, an additional level of validation becomes necessary, specifically as to whether a mobile station is authorised to use such an access network and whether this mobile station is authorised to access the core network portion via this unlicensed radio access network.

### SUMMARY OF THE INVENTION

It is thus an object of the present invention to enable the authentication and validation of mobile stations using an unlicensed radio access network that minimises the load on both the access network and the core network it connects to.

It is a further object of the present invention to enable the authentication and validation of mobile stations for use with an unlicensed access network.

These and further objects are achieved in an unlicensed radio access network and a method of validation of a mobile station in an unlicensed radio access network in accordance with the appended claims.

Specifically, the unlicensed radio access network according to the present invention includes an access controller that is adapted to communicate with the core network portion of a public mobile communication network and is connected to a broadband packet-switched network. The access controller is adapted to receive messages from mobile stations communicating via an unlicensed radio interface with access points connected to the broadband packet-switched network. The access controller comprises a screening module for monitoring information received from a mobile station and a connection controller coupled to the screening module for controlling the connection between the mobile station and the access controller. In particular, the screening module is adapted to determine whether a mobile station is permitted to connect to said access controller, and the connection controller is adapted to terminate a connection with the mobile station if the screening module determines that the mobile station is not permitted to connect to the access controller.

The provision of a screening function within the access network ensures that access to mobile core network resources is denied as soon as possible to unauthorised users and equipment.

Preferably, the screening module includes a module for extracting at least part of a subscriber identity from information received from said mobile station to obtain a network operator identity for said mobile station. A table containing permitted and/or barred network operator identities is coupled to the subscriber identity extractor module, and the subscriber identity extractor module is adapted to compare an extracted network operator identity with network operator identities stored in the table to determine whether the extracted network operator identity is valid and consequently whether the mobile station should be permitted to connect to the access controller and through this to the core network portion. In this manner only those mobile stations belonging to a network that is authorised to use the core network will be permitted to register with the access network and subsequently connect to the core network portion.

In accordance with a further embodiment of the invention, the screening module includes a module for extracting at least part of an equipment identity from information received from said mobile station. This module compares the extracted equipment identity with a list of permitted and/or barred equipment identities to determine whether said extracted equipment identity is authorised.

The screening module may additionally, or alternatively include a module for monitoring traffic between the mobile station and the access controller and from the mobile station to the core network portion. This monitoring module is adapted to signal to the connection controller to terminate the connection with the mobile station if it determines that the pattern of transactions initiated in said mobile station is abnormal. Such a module serves as an additional protection to the core network portion and also to the access controller by identifying defective and possibly malicious behaviour that threatens to undermine the core network operation, and by terminating the communication rapidly and cleanly.

This traffic or transaction monitoring is performed in a particularly simple manner, when communication between a mobile station and the access controller takes place on an open connection. The monitoring module is then adapted to monitor an open connection between a mobile station and the access controller. This is achieved, for example, when communication over the broadband network uses a protocol that maintains a connection state in the broadband network between the mobile station and the access controller.

In order to avoid having to process repeated attempts to register by a mobile station that has been denied access due to abnormal behaviour, a register associated with a mobile station is provided. This register is controlled by the connection controller, and is set by the connection controller when the connection with the mobile station is terminated. The connection controller then denies access to this mobile station while said register is set. Additionally a timer may be provided that is adapted to reset the register after a predetermined time period.

### BRIEF DESCRIPTION OF THE DRAWINGS

Further objects and advantages of the present invention will become apparent from the following description of the preferred embodiments that are given by way of example with reference to the accompanying drawings. In the figures:
- Fig. 1: schematically depicts parts of a GSM network with an unlicensed-radio access network,
- Fig. 2: is a block diagram schematically depicting the functional layout of the unlicensed-radio access controller in accordance with the present invention,
- Fig.3: is a flow diagram illustrating the function of part of the unlicensed radio access controller in accordance with the present invention, and
- Fig. 4: is a flow diagram illustrating the function of a further part of the unlicensed radio access controller in accordance with the present invention.

### DETAILED DESCRIPTION OF THE DRAWINGS

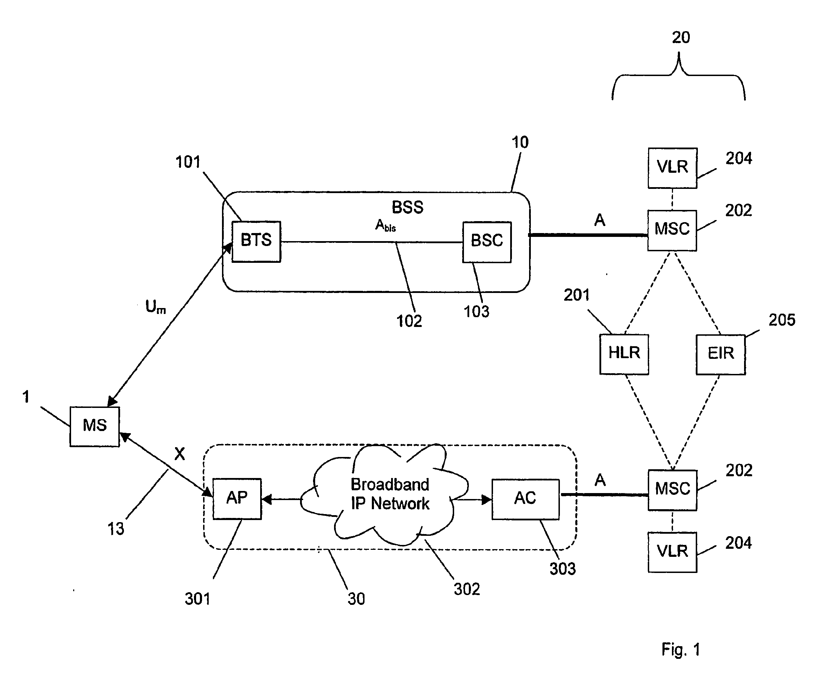

Figure 1 schematically depicts parts of a conventional GSM network. This network is essentially divided into a core network portion 20 and an access portion also known as a base station subsystem BSS 10. The elements of the core network 20 illustrated in the figure include the mobile switching centers or MSCs 202, associated home location register HLR 201 and visitor location register VLR 204. The function and structure of these conventional GSM architecture elements are known to those skilled in the art and will not be described in further detail here. Although not shown in the figure, it will be understood by those skilled in the art that the core network portion may include access to other mobile and fixed-line networks, such as ISDN and PSTN networks, packet and circuit switched packet data networks such as intranets, extranets and the Internet through one or more gateway nodes. Also illustrated in the figure is the Equipment Identity Register EIR 205, which is a database that stores the identity of mobile equipment in the form of the International Mobile Equipment Identity IMEI and is used primarily to prevent calls from stolen, unauthorized or defective mobile stations.

The access portion essentially consists of base station subsystems BSS 10, one of which is illustrated in Fig. 1, which communicate via defined fixed standard A interfaces with MSCs 202 in the core network portion 20. Each base station subsystem BSS 10 includes a base station controller BSC 103 which communicates with one or more base transceiver stations BTS 101 via the defined A_{bis} air interface 102. The base transceiver stations 101 communicate with mobile stations MS 1 over the GSM standard Uₘ radio air interface. It will be understood that while the BTS 101 and BSC 103 are depicted as forming a single entity in the BSS 10, the BSC 103 is often separate from the BTSs 101 and may even be located at the mobile services switching centre MSC 202.

In addition to the standard access network portion provided by the BSS's 10 the network depicted in Fig. 1 further includes a modified access network portion 30 shown in the lower half of the figure. Hereinafter this will be described as an unlicensed-radio access network portion.

The components making up this unlicensed-radio access network portion 30 also enable the mobile station 1 to access the GSM core network portion, and through this, other communication networks via an unlicensed-radio interface X, represented in Fig. 1 by the bi-directional arrow 13. By unlicensed-radio is meant any radio protocol that does not require the operator running the mobile network to have obtained a license from the appropriate regulatory body. In general, such unlicensed-radio technologies must be low power and thus of limited range compared to licensed mobile radio services. This means that the battery lifetime of mobile stations will be greater. Moreover, because the range is low, the unlicensed-radio may be a broadband radio, thus providing improved voice quality. The radio interface may utilise any suitable unlicensed-radio protocol, for example a wireless LAN (W-LAN) protocol or Digital Enhanced Cordless Telecommunications (DECT). Preferably, however, Bluetooth radio is utilised, which has a high bandwidth and lower power consumption than conventional public mobile network radio.

The Bluetooth standard specifies a two-way digital radio link for short-range connections between different devices. Devices are equipped with a transceiver that transmits and receives in a frequency band around 2.45GHz. This band is available globally with some variation of bandwidth depending on the country. In addition to data, up to three voice channels are available. Each device has a unique 48-bit address from the IEEE 802 standard. Built-in encryption and verification is also available.

The access network portion 30 is accessed via access points AP 301 that are adapted to communicate across the Bluetooth interface. Only one access point AP 301 is illustrated in Fig. 1, but it will be understood that many hundreds of these elements may be included in the unlicensed-radio access network 30. This element handles the radio link protocols with the mobile station MS 1 and contains radio transceivers that define a cell in a similar manner to the operation of a conventional GSM base station transceiver BTS 101. All communication via the access points AP 301 is controlled by an access controller AC 303, which communicates with a mobile service switching centre MSC 202 over the GSM standard A interface. The access controller AC 303 provides the connection between the MSC 202 and mobile station 1. The joint function of the access point AP 301 and the access controller AC 303 emulates the operation of the BSS 10 towards the MSC 202. In other words, when viewed from the elements of the core network 20 such as the mobile service switching centre MSC 202, the access network portion 30 constituted by the access points AP 301 and the access controller AC 303 looks like a conventional access network portion 10.

The interface between the access point AP 301 and the access controller AC 303 is provided by a packet-switched broadband network, which may be a fixed network. The access point 301 is intended to be a small device that a subscriber can purchase and install in a desired location such as the home or an office environment to obtain a fixed access to the mobile network. However, they could also be installed by operators in traffic hotspots. In order to reduce the installation costs on the part of the operator, the interface between the access point 301 and the access controller 303 preferably exploits a connection provided by an already existing network 302. Suitable networks might include those based on ADSL, Ethernet, LMDS, or the like. Home connections to such networks are increasingly available to subscribers while access points to such networks are becoming widespread in public and commercial buildings. Although not shown in Fig. 1, the access point AP 301 will be connected to a network terminal giving access to the network 302, while the access controller AC 303 may be connected to an edge router ER of the network 302 that also links the network 302 to other networks such as intranets and the internet. The Internet protocol, IP, is used for communication over the network 302 to render the transport of data independent of the network type.

The access point AP 301 may serve as a dedicated access point to the unlicensed-radio access network. In this case the access point AP 301 is capable of communicating independently with the mobile station 10 over the unlicensed-radio interface X or with the access controller 303 over the broadband network interface 302. The access point AP 301 utilises the standard protocols and functions to ascertain to which access controller AC 303 it should connect, and also to establish a connection and register with this access controller AC 303.

In an alternative embodiment, the access point 301 serves as an essentially transparent access point when viewed both from the access controller 303 and the mobile station 1. In other words, this access point relays all information at the IP level and above between the mobile station 1 and the access controller 303. It simply effects the conversion between the OSI reference model layer 1 and 2 unlicensed-radio and terrestrial access layer services. Accordingly, the mobile station 1 establishes a connection with the access controller 303 without recognising the access point as a node in the connection. Similarly the access controller 303 could establish a connection with the mobile station 1 directly.

The link between the mobile station MS 1 and the access controller AC 303 over the broadband IP network 302 is always open, so that this connection is always available without the need for reserving a channel. Specifically, a transport protocol is utilised that maintains a connection state between a mobile station MS 1 and the access controller AC 303. One suitable transport protocol is the Transmission Control Protocol (TCP), however, other protocols such as the User Datagram Protocol (UDP) or the Signalling Control Transfer Protocol could also be used. While the network 302 is preferably an IP-based network, ATM-based networks could also be used. In particular when DSL technologies are used in this network, they could be used directly on top of the ATM layer, since they are based on ATM. Naturally, an ATM based network could also be used to transport IP, serving as a base layer.

The applications that run on the mobile station MS 1 on top of the public mobile network radio interfaces also run on top of Bluetooth radio between the mobile station 1 and the access point AP 301.

The access point AP 301 is installed by plugging it in to a port of a suitable modem, such as an ADSL or CATV modem, to access the fixed network 302. Alternatively, the access point AO 301 could be integrated in such a modem. The port is in contact with an intranet that is either bridged or routed on the IP level.

In a conventional GSM network or other public licensed mobile network PLMN, such as CDMA2000 or UTMS, a mobile station is authenticated and validated when it registers with a network. In a GSM system the Equipment Identity Register EIR typically contains three lists of International Mobile Equipment Identities IMEI for mobile stations that are barred, that are to be tracked and that are valid. The mobile services switching center MSC queries the EIR when a mobile station registers with the network to determine whether the mobile can be allowed to use the service. A further level of security is provided by an authentication center AUC. This links the International Mobile Subscriber Identity IMSI to authentication and encryption parameters to verify a users identity and ensure the confidentiality of each call. In both cases, the mobile station is authenticated and verified in the core network portion of the network.

In accordance with the present invention, an additional level of security is provided in the unlicensed access network so that unauthorised mobile stations can be prevented from accessing the core network portion. In addition mobile stations that behave in an unusual manner can be identified and barred from the network. By filtering the mobile stations in the unlicensed radio access network the core network is protected. In addition, this permits the right of access to the unlicensed radio access network itself to be verified.

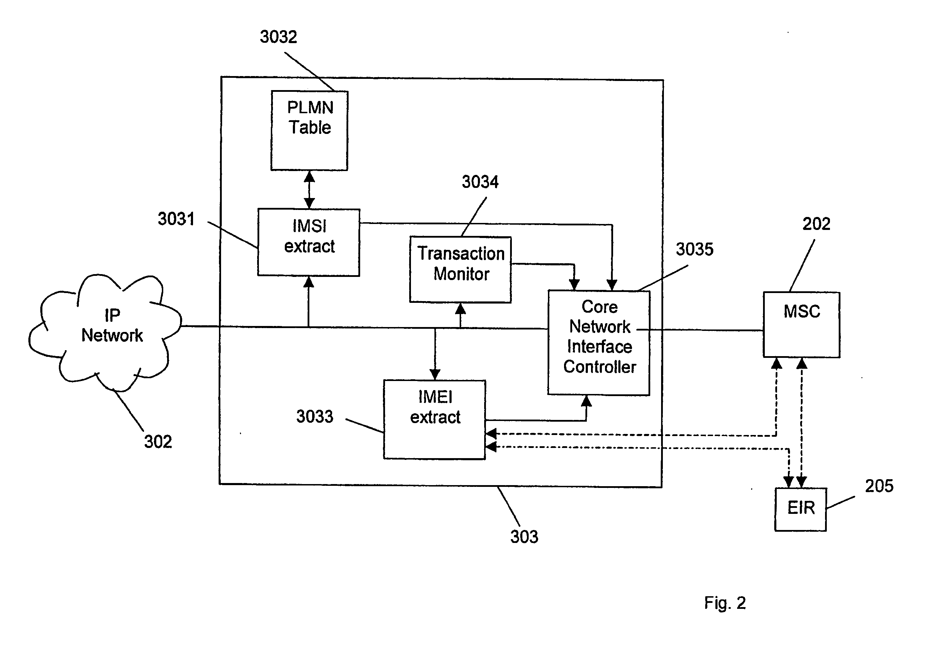

Fig. 2 shows a functional block diagram of those parts of the unlicensed radio access network controller AC 303 that permit this additional level of security in accordance with the present invention. As shown in Fig. 2 the access controller AC 303 is connected to the broadband IP network 302 and all communications to and from the mobile stations MS 1 occurs via this IP network 302. The access controller AC 303 is further connected to a mobile services switching center MSC 202 in the core network portion of the PLMN. Although not illustrated in the figures, the access controller AC 303 could also provide access to the General Packet Radio Service GPRS by providing a Gb interface to a GPRS support node (SGSN).

In accordance with the simplified block structure of the access controller AC 303 as depicted in Fig. 2, communications originating from a mobile station MS 1 are passed to the core network portion 20 by a core network interface controller 3035, which either passes messages by converting them to the standard A (or Gb) interface or blocks access to the core network portion 20. Three further functional blocks are shown connected to this core network interface controller 3035. Depending on the information received from these three blocks, the core network interface controller 3035 either permits or denies access to the core network 20. A first block 3031 extracts the International Mobile Subscriber Identity IMSI from a registration request received from a mobile station MS 1 via the IP network 302. The IMSI is composed of three parts: a mobile country code MCC, which consists of three digits and uniquely identifies the country of domicile of the mobile subscriber; a mobile network code MNC, consisting of two or three digits for GSM applications and which identifies the home GSM network (i.e. the network operator) of the mobile subscriber; and a mobile subscriber identification number MSIN, which identifies the mobile subscriber within a GSM PLMN. The first two parts of the IMSI, namely the MCC and MNC, serve to identify a mobile operator or PLMN. The IMSI extractor 3031 is connected to a database or memory 3032 containing a table of PLMNs. This database 3032 may include a list of PLMNs to which the unlicensed radio access network is permitted to provide access, or a so-called "white list". In other words the table will list all PLMNs that have a roaming or similar agreement with the core network accessed via the unlicensed radio access network. Alternatively, or in addition, the database 3032 may include a black list of PLMNs listing those PLMNs for which no access can be obtained via the unlicensed radio access network. After obtaining the IMSI from the mobile station, the IMSI extractor retrieves the MCC and MNC portions to obtain a PLMN identifier, which it compares with the PLMN identifiers contained in the table or tables 3032. If the PLMN identifier corresponds to a permitted PLMN, the mobile station MS 1 is permitted to register and obtain access to both the access network and core network resources. Conversely if the PLMN identifier does not correspond to an allowed PLMN the mobile station registration is rejected and access to the core network is blocked.

A second, optional, block is an International Mobile Equipment Identifier IMEI extractor 3033. If the mobile station includes an IMEI in its registration request or is requested to do so by the access or core networks, this block extracts the IMEI from the registration message. This block then sends a query containing the received IMEI to the Equipment Identity Register EIR 205 via the mobile services switching center MSC 202 in the core network portion. As mentioned above, the Equipment Identity Register EIR 205 lists the International Mobile Equipment Identities IMEI of mobile stations that are barred, that are to be tracked and that are valid. Depending on the response to the query, the IMEI extractor block 3033 signals to the core network interface controller 3035 to either permit or deny registration of the mobile station. In an alternative embodiment, the IMEI extractor 3033 is capable of interfacing with the Equipment Identity Register EIR 205 directly without having to pass the query through the mobile services switching center MSC 202. This is illustrated in the figure by a dot-dashed double-headed arrow between these two elements. In a still further embodiment, not illustrated in Fig. 2, the EIR functionality is incorporated in the access controller 303, for example as a separate table or database, and is updated from the EIR 205 in the core network periodically.

The third block that intercepts communication between mobile stations MS 1 and the core network portion 20 is a transaction monitor 3034. This block operates only after registration of a mobile station MS 1 with the access and core network and serves to monitor the behaviour of a mobile station. As mentioned above, once a mobile station is registered with the access controller AC 303, the connection through the IP network 302 between a mobile station MS 1 and the access controller AC 303 is always open, even when a mobile station is idle. There is no need to reserve channels, nor is it necessary to identify each communication separately, since all traffic on a designated open connection will originate from the same mobile station MS 1. Accordingly, the transaction monitor 3034 is able to monitor all traffic originating in a single mobile station MS 1. If the number of transactions started by the mobile station is too high, indicating defective operation or a malicious intent to destabilise the core network, the transaction monitor 3034 will signal the core network interface controller 3035 to terminate access for this mobile station to the core network. This could be the case, for example, if a mobile station is generating location update messages too often as a result of a loop. Such a transaction could cripple the mobile services switching center 202. At the same time as forcing the mobile station MS 1 out of the system, the core network interface controller 3035 also sets a register indicating that the mobile station should be denied access in the future. This register is preferably linked to a timer, so that after a predetermined time period, such as a number of days, for example, the register is reset and the mobile station MS 1 may reattempt registration to the access controller AC 303.

The separate block structure illustrated in Fig. 2 is given by way of example only. It will be appreciated by those skilled in the art that the function of all three elements could alternatively be accomplished by a single or groups of processors with the appropriate memory.

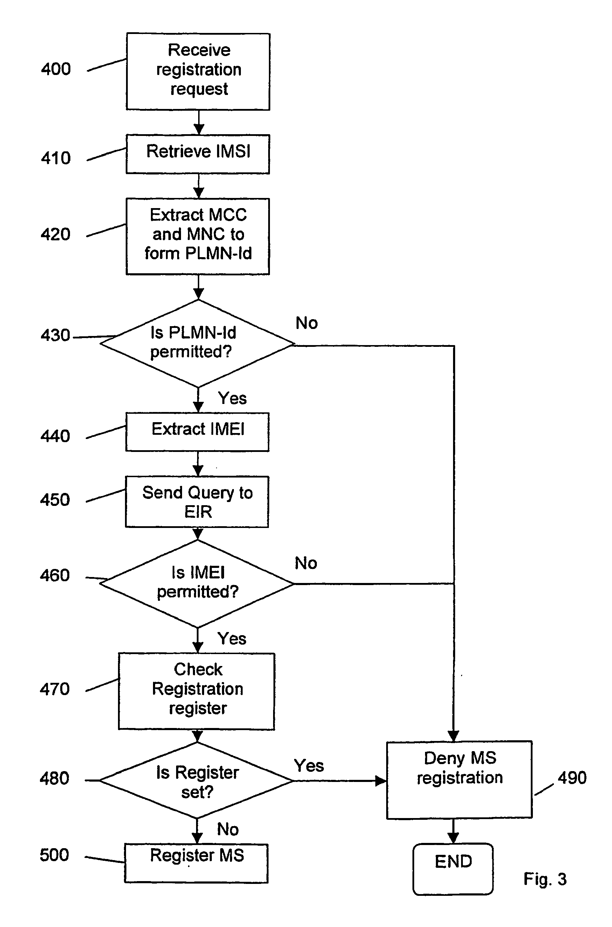

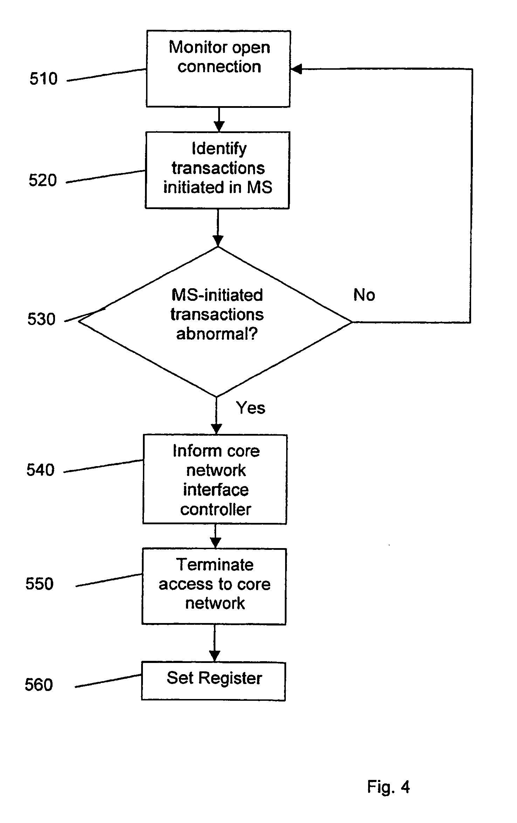

The function of the access controller 303 is illustrated in flow diagrams in Figs. 3 and 4.
Turning to Fig. 3, the flow chart starts at step 400 with the receipt by the access controller AC 303 of a registration request from a mobile station MS 1. At step 410 the IMSI extractor 3031 retrieves the IMSI from the registration message and at step 420 extracts the MCC and MNC from the IMSI to form a PLMN identifier PLMN-Id. At step 430, the PLMN-Id is compared with the list or lists present in the memory 3032 to determine whether the mobile station belongs to an allowed operator. If the answer is yes, the method continues onto block 440. If, on the other hand, the answer is no, the method passes to block 490, the IMSI extractor informs the core network interface controller 3035 which denies the registration request. The method then terminates until another registration request is received. At block 440, the IMEI extractor obtains the International Mobile Equipment Identity from the registration message, or from a separate message forming part of the registration request. The IMEI then formulates a validation request containing this IMEI and sends it to the Equipment Identity Register, either via the mobile services switching center 202 MSC or to the EIR 205 in the core network directly. In accordance with a further variation, the IMEI extractor consults a local register or table provided in the access controller AC 303 and determines whether the IMEI of the mobile station is permitted. If the response to the query or the determination within the IMEI extractor comes back negative in step 460, the method moves on to block 490 and registration is denied to the mobile station. If the response is positive, the method then moves on to step 470, where the core network interface controller 3035 checks to see whether the register for barred mobile stations has been set. If the register is set at step 480, the method moves on to step 490 and registration is denied. If, conversely, the register is not set, the method passes on to step 500 and the mobile station is registered with the access controller 303.

Turning now to Fig. 4, the method continues after registration of the mobile station. At step 510 the transaction monitor 3034 watches the connection used between a single mobile station MS 1 and the access controller AC 303. This step also includes the monitoring of the communication between the mobile station and the mobile services switching center 202 of the core network that is relayed by the access controller 303. All transactions initiated in the mobile station MS 1 are logged at step 520. At step 530, it is determined whether the incidence of transactions initiated by the mobile station is too high, in other words whether the frequency with which the mobile station generates some transactions is unusual or if the information generated by the mobile station MS is otherwise abnormal. An example of abnormal behaviour might be if the IMSI or the Packet Temporary Mobile Subscriber Identity P-TMSI contained in a Location Update Request differs from the value received during registration or attachment. If the answer is no, the method loops back to step 510 and monitoring continues. If, conversely, the incidence of the mobile station transactions is determined to be abnormally high or high enough to create disruption in the core network, the method passes on the step 540 and the transaction monitor informs the core network interface controller 3035. At step 550, the core network interface controller 3035 terminates the connection with the mobile station and at step 560 the core network interface controller 3035 sets the register, optionally with the timer. The register may be a memory area linked in some way with the identification of the mobile station, i.e. either the IMSI or the IMEI. Alternatively, the register may be a form of lookup table containing a mobile station identifier, in which individual entries are deleted after a predetermined time period. The register may include a list of mobile stations, for example, identified by the IMSI a combination of the IMSI with the IMEI, some derivative of these or a separate identifier that is linked at least to the IMSI. In this case, the register could be used by the IMSI extractor - and the IMEI extractor in those cases when no IMSI extractor is provided, or when the IMEI is verified first - such that when the retrieved identifier is stored in the register further checking for this mobile station is not carried out, but registration is denied immediately. In the method illustrated in Fig. 3 this would mean that step 470 should be performed between steps 410 and 420, i.e. between the retrieval of the IMSI and the verification of the validity of this IMSI at step 420.

It should be understood that while three functional blocks are shown in the access controller 303 and described with reference to the flow diagrams in Figs. 3 and 4, any one of these functions may be provided independently of the others. For example, an access controller AC 303 may screen mobile stations according to the PLMN, but rely on the core network to provide the necessary equipment identity screening using the Equipment Identity Register EIR in accordance with a conventional PLMN operation. In this case, the method in Fig. 3 would pass from step 430 to step 470 or possibly directly to step 500. Similarly, the monitoring of the behaviour of mobile stations after registration with the access network may be the only validation control provided in the access controller AC 303, or may be combined with only one or the other of the screening functions provided by the functional blocks 3031 and 3033.

It will be appreciated that the arrangement described above applies also to the use of the access network to provide the General Packet Radio Service GPRS to the mobile station. In such an arrangement, the access controller AC is connected via a Gb interface to a GPRS support node (SGSN) and will extract the subscriber and/or equipment identifiers and/or monitor the packet service traffic to the access controller and to the core network node in the same way as described above.

While the above arrangement and method have been described with specific reference to a GSM system it will be understood that the present invention can equally be applied to other cellular systems, such as UTMS or CDMA2000, for example. In all cases an equivalent subscriber identifier capable of indicating the operator to which the mobile station belongs may be used in place of the IMSI, while an equipment identifier can be used in place of the IMEI.

## Claims

1. An unlicensed radio access network including an access controller (303) adapted to communicate with the core network portion (20) of a public mobile communication network and connected to a broadband packet-switched network (302), said access controller (303) being adapted to receive messages from mobile stations (1) communicating via an unlicensed radio interface with access points (301) connected, to said broadband packet-switched network (302), **characterised in that** said access controller (303) comprises a screening module (3031; 3033; 3034) for monitoring information received from a mobile station and a connection controller (3035) coupled to said screening module for controlling the connection between the mobile station and the access controller (303), wherein said screening module is adapted to determine whether a mobile station is permitted to connect to said access controller and said connection controller (3035) is adapted to terminate a connection with the mobile station if the screening module determines that the mobile station is not permitted to connect to the access controller.

2. An unlicensed radio access network as claimed in claim 1, **characterised in that** said screening module includes a module (3031) for extracting at least part of a subscriber identity from information received from said mobile station to obtain a network operator identity for said mobile station, and a table (3032) containing permitted and/or barred network operator identities coupled to said subscriber identity extractor module, said subscriber identity extractor module (3031) being adapted to compare an extracted network operator identity with network operator identities stored in said table to determine whether said extracted network operator identity is valid.

3. An unlicensed radio access network as claimed in claim 2, **characterised in that** said subscriber identity extractor module (3031) is adapted to extract at least part of a subscriber identity from a registration request received from said mobile station.

4. An unlicensed radio access network as claimed in any previous claim, **characterised in that** said screening module includes a module for extracting at least part of an equipment identity from information received from said mobile station and for comparing said extracted equipment identity with a list of permitted and/or barred equipment identities to determine whether said extracted equipment identity is authorised.

5. An unlicensed radio access network as claimed in claim 2, **characterised in that** said equipment identity extractor module (3031) is adapted to extract at least part of a subscriber identity from a registration request received from said mobile station.

6. An unlicensed radio access network as claimed in any previous claim, **characterised in that** said screening module includes a module (3034) for monitoring traffic between said mobile station (1) and said access controller (303) and said mobile station and the core network portion, said monitoring module (3034) being adapted to signal to said connection controller (3035) to terminate the connection with said mobile station if said monitoring module determines that the pattern or nature of transactions initiated in said mobile station is abnormal.

7. An unlicensed radio access network as claimed in claim 6, **characterised in that** communication between a mobile station and said access controller takes place on an open connection, and **in that** said monitoring module (3034) is adapted to monitor an open connection between a mobile station and said access controller (303).

8. An unlicensed radio access network as claimed in claim 6 or 7, further **characterised by** a register associated with a mobile station and controlled by said connection controller (3035), wherein said connection controller is adapted to set said register when the connection with said mobile station is terminated and to deny access to said mobile station while said register is set.

9. An unlicensed radio access network as claimed in claim 8 further **characterised by** a timer adapted to reset said register after a predetermined time period.

10. A method of validating a mobile station in an unlicensed radio access network, wherein the unlicensed radio access network includes an access controller (303) adapted to communicate with the core network portion (20) of a public mobile communication network and connected to a broadband packet-switched network (302), said access controller (303) being adapted to receive messages from mobile stations (1) communicating via an unlicensed radio interface with access points (301) connected to said broadband packet-switched network (302), **characterised in that** said method comprises the steps of:
said access controller monitoring information received from a mobile station to determine whether a mobile station is permitted to connect to said access controller, and said access controller terminating a connection with the mobile station if it is determined the mobile station is not permitted to connect to the access controller.

11. A method as claimed in claim 10, **characterised in that** the step of
monitoring information includes extracting at least part of a subscriber identity from said received information to obtain a network operator identity for said mobile station, and
comparing said extracted identity with permitted and/or barred network operator identities to determine whether said extracted network operator identity is valid.

12. A method as claimed in claim 10 or 11, **characterised in that** the step of monitoring information includes extracting at least part of an equipment identity from information received from said mobile station, and comparing said extracted equipment identity with a list of permitted and/or barred equipment identities to determine whether said extracted equipment identity is authorised.

13. A method as claimed in any one of claims 10 to 12, **characterised in that** the step of
monitoring information includes monitoring traffic between said mobile station and said access controller and between said mobile station and the core network portion,
and said terminating step includes terminating the connection with said mobile station if it is determined that the pattern or nature of transactions initiated in said mobile station is abnormal.

## Patentansprüche

1. Unlizensiertes Funkzugangsnetz, welches eine Zugangssteuerung (303) aufweist, die dafür geeignet ist, mit dem Hauptnetzabschnitt (20) eines öffentlichen Mobilfunknetzes zu kommunizieren, und mit einem paketvermittelten Breitbandnetz (302) verbunden ist, wobei die Zugangssteuerung (303) dafür geeignet ist, Meldungen von Mobilstationen (1) zu empfangen, die über eine unlizensierte Funkschnittstelle mit Zugangspunkten (301) kommunizieren, die mit dem paketvermittelten Breitbandnetz (302) verbunden sind, **dadurch gekennzeichnet, dass** die Zugangssteuerung (303) ein Screening-Modul (3031; 3033; 3034) zum Überwachen von Informationen, die von einer Mobilstation empfangen werden, und eine Verbindungssteuerung (3035) umfasst, die mit dem Screening-Modul verknüpft ist, um die Verbindung zwischen der Mobilstation und der Zugangssteuerung (303) zu steuern, wobei das Screening-Modul dafür geeignet ist zu bestimmen, ob eine Mobilstation dazu berechtigt ist, mit der Zugangssteuerung verbunden zu werden, und die Verbindungssteuerung (3035) dafür geeignet ist, eine Verbindung mit der Mobilstation zu beenden, wenn das Screening-Modul bestimmt, dass die Mobilstation nicht dazu berechtigt ist, mit der Zugangssteuerung verbunden zu werden.

2. Unlizensiertes Funkzugangsnetz nach Anspruch 1, **dadurch gekennzeichnet, dass** das Screening-Modul ein Modul (3031) zum Extrahieren zumindest eines Teils einer Teilnehmeridentität aus Informationen, die von der Mobilstation empfangen werden, um eine Netzwerkoperatoridentität für die Mobilstation zu erhalten, und eine Tabelle (3032) umfasst, welche zugelassene und/oder gesperrte Netzwerkoperatoridentitäten enthält und mit dem Teilnehmeridentitäten-Extraktionsmodul verknüpft ist, wobei das Teilnehmeridentitäten-Extraktionsmodul (3031) dafür geeignet ist, eine extrahierte Netzwerkoperatoridentität mit Netzwerkoperatoridentitäten zu vergleichen, die in der Tabelle gespeichert sind, um zu bestimmen, ob die extrahierte Netzwerkoperatoridentität gültig ist.

3. Unlizensiertes Funkzugangsnetz nach Anspruch 2, **dadurch gekennzeichnet, dass** das Teilnehmeridentitäten-Extraktionsmodul (3031) dafür geeignet ist, zumindest einen Teil einer Teilnehmeridentität aus einer Registrierungsanforderung zu extrahieren, die von der Mobilstation empfangen wird.

4. Unlizensiertes Funkzugangsnetz nach einem der vorhergehenden Ansprüche, **dadurch gekennzeichnet, dass** das Screening-Modul ein Modul zum Extrahieren zumindest eines Teils einer Geräteidentität aus Informationen, die von der Mobilstation empfangen werden, und zum Vergleichen der extrahierten Geräteidentität mit einer Liste zugelassener und/oder gesperrter Geräteidentitäten umfasst, um zu bestimmen, ob die extrahierte Geräteidentität berechtigt ist.

5. Unlizensiertes Funkzugangsnetz nach Anspruch 2, **dadurch gekennzeichnet, dass** das Geräteidentitäten-Extraktionsmodul (3031) dafür geeignet ist, zumindest einen Teil einer Teilnehmeridentität aus einer Registrierungsanforderung zu extrahieren, die von der Mobilstation empfangen wird.

6. Unlizensiertes Funkzugangsnetz nach einem der vorhergehenden Ansprüche, **dadurch gekennzeichnet, dass** das Screening-Modul ein Modul (3034) zum Überwachen von Verkehr zwischen der Mobilstation (1) und der Zugangssteuerung (303) und der Mobilstation und dem Hauptnetzabschnitt umfasst, wobei das Überwachungsmodul (3034) dafür geeignet ist, der Verbindungssteuerung (3035) zu signalisieren, die Verbindung mit der Mobilstation zu beenden, wenn das Überwachungsmodul bestimmt, dass die Struktur oder die Natur von Transaktionen, die in der Mobilstation ausgelöst werden, anormal ist.

7. Unlizensiertes Funkzugangsnetz nach Anspruch 6, **dadurch gekennzeichnet, dass** die Kommunikation zwischen einer Mobilstation und der Zugangssteuerung auf einer offenen Verbindung stattfindet und dass das Überwachungsmodul (3034) dafür geeignet ist, eine offene Verbindung zwischen einer Mobilstation und der Zugangssteuerung (303) zu überwachen.

8. Unlizensiertes Funkzugangsnetz nach Anspruch 6 oder 7, welches ferner durch ein Register gekennzeichnet ist, das zu einer Mobilstation gehört und von der Verbindungssteuerung (3035) gesteuert wird, wobei die Verbindungssteuerung dafür geeignet ist, das Register zu stellen, wenn die Verbindung mit der Mobilstation beendet wird, und den Zugang zu der Mobilstation zu verweigern, während das Register gestellt wird.

9. Unlizensiertes Funkzugangsnetz nach Anspruch 8, welches ferner durch einen Timer gekennzeichnet ist, der dafür geeignet ist, das Register nach einer vorgegebenen Zeitperiode zurückzustellen.

10. Verfahren zum Validieren einer Mobilstation in einem unlizensierten Funkzugangsnetz, wobei das unlizensierte Funkzugangsnetz eine Zugangssteuerung (303) umfasst, die dafür geeignet ist, mit dem Hauptnetzabschnitt (20) eines öffentlichen Mobilfunknetzes zu kommunizieren, und mit einem paketvermittelten Breitbandnetz (302) verbunden ist, wobei die Zugangssteuerung (303) dafür geeignet ist, Meldungen von Mobilstationen (1) zu empfangen, die über eine unlizensierte Funkschnittstelle mit Zugangspunkten (301) kommunizieren, die mit dem paketvermittelten Breitbandnetz (302) verbunden sind, **dadurch gekennzeichnet, dass** das Verfahren die folgenden Schritte umfasst:
Überwachen von Informationen, die von einer Mobilstation empfangen werden, durch die Zugangssteuerung, um zu bestimmen, ob eine Mobilstation dazu berechtigt ist, mit der Zugangssteuerung verbunden zu werden, und
Beenden einer Verbindung mit der Mobilstation durch die Zugangssteuerung, wenn bestimmt wird, dass die Mobilstation nicht dazu berechtigt ist, mit der Zugangssteuerung verbunden zu werden.

11. Verfahren nach Anspruch 10, **dadurch gekennzeichnet, dass** der Schritt des Überwachens von Informationen das Extrahieren zumindest eines Teils einer Teilnehmeridentität aus den empfangenen Informationen, um eine Netzwerkoperatoridentität für die Mobilstation zu erhalten, und
das Vergleichen der extrahierten Identität mit zugelassenen und/oder gesperrten Netzwerkoperatoridentitäten umfasst, um zu bestimmen, ob die extrahierte Netzwerkoperatoridentität gültig ist.

12. Verfahren nach Anspruch 10 oder 11, **dadurch gekennzeichnet, dass** der Schritt des Überwachens von Informationen das Extrahieren zumindest eines Teils einer Geräteidentität aus den von der Mobilstation empfangenen Informationen und
das Vergleichen der extrahierten Geräteidentität mit einer Liste zugelassener und/oder gesperrter Geräteidentitäten umfasst, um zu bestimmen, ob die extrahierte Geräteidentität berechtigt ist.

13. Verfahren nach einem der Ansprüche 10 bis 12, **dadurch gekennzeichnet, dass** der Schritt des Überwachens von Informationen das Überwachen von Verkehr zwischen der Mobilstation und der Zugangssteuerung und zwischen der Mobilstation und dem Hauptnetzabschnitt umfasst und
der Schritt des Beendens das Beenden der Verbindung mit der Mobilstation umfasst, wenn bestimmt wird, dass die Struktur oder die Natur von Transaktionen, die in der Mobilstation ausgelöst werden, anormal ist.

## Revendications

1. Réseau d'accès radio sans licence comprenant un contrôleur d'accès (303) apte à communiquer avec la portion de réseau de coeur (20) d'un réseau de communication mobile public et relié à un réseau à commutation de paquets de bande large (302), ledit contrôleur d'accès (303) étant apte à recevoir des messages de stations mobiles (1) communiquant par l'intermédiaire d'une interface radio sans licence avec des points d'accès (301) reliés au dit réseau à commutation de paquets de bande large (302), **caractérisé en ce que** ledit contrôleur d'accès (303) comprend un module de filtrage (3031; 3033; 3034) pour surveiller des informations reçues d'une station mobile et un contrôleur de liaison (3035) couplé au dit module de filtrage pour commander la liaison entre la station mobile et le contrôleur d'accès (303), dans lequel ledit module de filtrage est apte à déterminer si une station mobile est autorisée à se relier au dit contrôleur d'accès et ledit contrôleur de liaison (3035) est apte à terminer une liaison avec la station mobile si le module de filtrage détermine que la station mobile n'est pas autorisée à se relier au contrôleur d'accès.

2. Réseau d'accès radio sans licence selon la revendication 1, **caractérisé en ce que** ledit module de filtrage comprend un module (3031) pour extraire au moins une partie d'une identité d'abonné à partir d'informations reçues de ladite station mobile pour obtenir une identité d'opérateur de réseau pour ladite station mobile, et une table (3032) contenant des identités d'opérateurs de réseaux autorisées et/ou interdites couplées au dit module d'extraction d'identité d'abonné, ledit module d'extraction d'identité d'abonné (3031) étant apte à comparer une identité d'opérateur de réseau extraite à des identités d'opérateurs de réseaux stockées dans ladite table pour déterminer si ladite identité d'opérateur de réseau extraite est valide.

3. Réseau d'accès radio sans licence selon la revendication 2, **caractérisé en ce que** ledit module d'extraction d'identité d'abonné (3031) est apte à extraire au moins une partie d'une identité d'abonné à partir d'une demande d'enregistrement reçue de la part de ladite station mobile.

4. Réseau d'accès radio sans licence selon l'une quelconque des revendications précédentes, **caractérisé en ce que** ledit module de filtrage comprend un module pour extraire au moins une partie d'une identité d'équipement à partir d'informations reçues de ladite station mobile et pour comparer ladite identité d'équipement extraite à une liste d'identités d'équipements autorisées et/ou interdites pour déterminer si ladite identité d'équipement extraite est autorisée.

5. Réseau d'accès radio sans licence selon la revendication 2, **caractérisé en ce que** ledit module d'extraction d'identité d'équipement (3031) est apte à extraire au moins une partie d'une identité d'abonné à partir d'une demande d'enregistrement reçue de la part de ladite station mobile.

6. Réseau d'accès radio sans licence selon l'une quelconque des revendications précédentes, **caractérisé en ce que** ledit module de filtrage comprend un module (3034) pour surveiller un trafic entre ladite station mobile (1) et ledit contrôleur d'accès (303) et entre ladite station mobile et la portion de réseau de coeur, ledit module de surveillance (3034) étant apte à signaler au dit contrôleur de liaison (3035) de terminer la liaison avec ladite station mobile si ledit module de surveillance détermine que le profil ou la nature de transactions lancées dans ladite station mobile est anormal.

7. Réseau d'accès radio sans licence selon la revendication 6, **caractérisé en ce qu'**une communication entre une station mobile et ledit contrôleur d'accès se déroule sur une liaison ouverte, et **en ce que** ledit module de surveillance (3034) est apte à surveiller une liaison ouverte entre une station mobile et ledit contrôleur d' accès (303).

8. Réseau d'accès radio sans licence selon la revendication 6 ou 7, **caractérisé en outre par** un registre associé à une station mobile et commandé par ledit contrôleur de liaison (3035), dans lequel ledit contrôleur de liaison est apte à régler ledit registre lorsque la liaison avec ladite station mobile est terminée et à interdire l'accès à ladite station mobile pendant que ledit registre est réglé.

9. Réseau d'accès radio sans licence selon la revendication 8, **caractérisé en outre par** une minuterie apte à réinitialiser ledit registre après une période de temps prédéterminée.

10. Procédé de validation d'une station mobile dans un réseau d'accès radio sans licence, dans lequel ledit réseau d'accès radio sans licence comprend un contrôleur d'accès (303) apte à communiquer avec la portion de réseau de coeur (20) d'un réseau de communication mobile public et relié à un réseau à commutation de paquets de bande large (302), ledit contrôleur d'accès (303) étant apte à recevoir des messages de stations mobiles (1) communiquant par l'intermédiaire d'une interface radio sans licence avec des points d'accès (301) reliés au dit réseau à commutation de paquets de bande large (302), **caractérisé en ce que** ledit procédé comprend les étapes de:
la surveillance par ledit contrôleur d'accès d'informations reçues d'une station mobile pour déterminer si une station mobile est autorisée à se relier au dit contrôleur d'accès, et
la terminaison par ledit contrôleur d'accès d'une liaison avec la station mobile s'il est déterminé que la station mobile n'est pas autorisée à se relier au contrôleur d'accès.

11. Procédé selon la revendication 10, **caractérisé en ce que** l'étape de la surveillance d'informations comprend:
l'extraction d'au moins une partie d'une identité d'abonné à partir desdites informations reçues pour obtenir une identité d'opérateur de réseau pour ladite station mobile, et
la comparaison de ladite identité extraite à des identités d'opérateurs de réseaux autorisées et/ou interdites pour déterminer si ladite identité d'opérateur de réseau extraite est valide.

12. Procédé selon la revendication 10 ou 11, **caractérisé en ce que** l'étape de la surveillance d'informations comprend:
l'extraction d'au moins une partie d'une identité d'équipement à partir d'informations reçues de ladite station mobile, et
la comparaison de ladite identité d'équipement extraite à une liste d'identités d'équipements autorisées et/ou interdites pour déterminer si ladite identité d'équipement extraite est autorisée.

13. Procédé selon l'une quelconque des revendications 10 à 12, **caractérisé en ce que**:
l'étape de la surveillance d'informations comprend la surveillance d'un trafic entre ladite station mobile et ledit contrôleur d'accès et entre ladite station mobile et la portion de réseau de coeur, et
ladite étape de terminaison comprend la terminaison de la liaison avec ladite station mobile s'il est déterminé que le profil ou la nature de transactions lancées dans ladite station mobile est anormal.
